# EUROPEAN PATENT APPLICATION

(11) **EP 1 126 421 A2**
(43) Date of publication of application: **22.08.2001**
(21) Application number: 01300560.8
(22) Date of filing: 22.01.2001
(51) Int. Cl.: G07F 7/02, G07G 1/00

(54) **Security arrangements**

(30) Priority: 19.02.2000 GB 0003803
(71) Applicant: Hydroclean Retail Maintenance Limited, Newport NP1 9XX (GB)
(72) Inventor: Symonds, Paul Michael, Newport NP19 9GN (GB); Rolland, Dean Michael, Rogerstone Newport NP10 9EA (GB)
(74) Representative: Evans, Huw David Duncan

(57) **Abstract**

A security system for use in supermarkets and other retail outlets comprises a plurality of shopping trolleys and at least one point of sale terminal 10. Each point of sale terminal 10 comprises a transmitter 14 which provides an adjacent trolley 13 with an electronic token once the goods in the trolley have been paid for.

Each trolley 12 comprises a brake 19 on one its wheels which is applied in the event that an attempt is made to take the trolley out of the outlet without an electronic token having been received. The system thus prevents trollies being taken out of the outlet until the goods therein have been paid for at a point of sale.

## Description

This invention relates to security arrangements and more particularly but not solely to security arrangements for use in retail outlets such as supermarkets etc.

Retail outlets generally provide wheeled trolleys or so-called shopping trolleys in order to assist their customers in carrying the goods which have been selected for purchase to the point-of-sale and for carrying the purchased goods out to the customer's vehicles.

It will be appreciated that is relatively easy for a thief to push a trolley full of goods out of the doorway of the retail outlet without paying for the goods, since it is permitted to take trolleys out of the outlet.

It has been proposed to overcome this problem by providing a turnstile at the entrance to the retail outlet, which will not permit customers to leave the outlet without passing a point-of-sale.

Hitherto, such turnstiles were widely used to prevent theft. However, nowadays retail outlets favour an open doorway, through which customers can freely enter and leave, since it is believed that this creates a more customer friendly environment at the front of the outlet. Obviously, this means that thieves are once again able to leave the retail outlet with a trolley full of goods without paying for the goods.

Wheeled trolleys which comprise a brake that is automatically applied in the event that the trolley is taken outside of the perimeter of the site of the retail outlet are well known. However, the purpose of the brake is merely to prevent the trolley from being stolen or from being taken off site.

We have now devised a security device which alleviates the above-mentioned problems.

In accordance with this invention, there is provided a device comprising a receiver means for receiving, first and second wireless signals from first and second transmitters respectively, indicator means arranged to provide an indication only when said first signal is received, and control means for checking for the presence of said indication when said second signal is received and for generating an alarm signal only in the event that said indication is not present.

In use, the device may be in the form of a shopping trolley or basket for use in a supermarket, with the first transmitter being located at or adjacent a point of sale and the second transmitter being located at or adjacent a doorway. Thus if an attempt is made to take the trolley or basket out of the doorway without going to the point-of-sale, the alarm signal is generated.

In one embodiment, the security device is arranged to receive and store a token in said indicator means when said first signal is received, the control means being arranged to check for the presence of said token when said second signal is received and to generate an alarm signal in the event that said token is not present.

In an alternative embodiment, the security device is arranged to delete a token from said indicator means when said first signal is received, the control means being arranged to check for the presence of said token when said second signal is received and to generate an alarm signal in the event that said token is present.

Preferably the control means is arranged to remove the indication, so that the number of times which the second signal can be received without generating the alarm signal can be limited.

Preferably the control means is arranged to remove the indication upon receipt of the second signal.

Alternatively or additionally the control means is arranged to remove the indication after a predetermined period has elapsed following receipt of the first signal.

In some instances, customers collect a trolley or basket before they enter the retail outlet. In order to prevent the alarm signal from being generated as the empty trolley or basket passes the second transmitter upon entrance to the retail outlet, preferably the control means is arranged to inhibit said alarm signal until the second signal has been received at least twice.

It will be appreciated that the second signal is initially received as the trolley or basket is taken out of the retail outlet. The second signal is then received again as the trolley or basket is taken back into the retail outlet, whereupon the trolley or basket cannot then be taken out of the retail outlet again until it has been taken to a point-of-sale.

There is a risk that a thief may attempt to steal goods by using the trolley or basket to carry a small number of goods which are then taken to a point-of-sale or by using an empty trolley or basket which has been abandoned by a customer immediately after it has been taken to the point-of-sale. It will be appreciated that any such trolley or basket is able to receive the second signal at least once without generating an alarm signal and accordingly an alarm signal will not be generated as the trolley or basket is taken out of the doorway.

This problem can be overcome either by removing the indication after a predetermined time period has elapsed or by providing means for cancelling the flags upon receipt of a CLEAR signal: means for transmitting a CLEAR signal may be located on one or more thoroughfares or aisles within the outlet.

Preferably at least the first signal is coded, so that a would-be thief is unable to replicate the signal, in order to provide an indication.

Preferably the device is a trolley comprising a plurality of wheels, with at least one of the wheels incorporating braking means arranged to apply a braking force in the event that an alarm signal is generated: In this manner it is difficult for a thief to push the trolley out of the if an attempt is made to leave the retail outlet without taking the trolley to a point-of-sale.

Preferably, the device comprises a transducer which is arranged to transmit an alarm in the event that said alarm signal is generated: In this manner a member of staff can be alerted that an attempted theft has occurred.

In one embodiment, the control means is further arranged to apply said alarm signal to said braking means upon receipt of a global signal, for example transmitted by transmitting means located around the perimeter of the site of the retail outlet: in this manner trolleys cannot be taken off site.

In an alternative embodiment, the braking means is arranged to activate either upon receipt of a global signal from a transmitting means located around the periphery of the site or upon receipt of a global signal generated by the device in response to said alarm signal.

In this embodiment, it will be appreciated that a security unit can be fitted to existing trolleys of the type having braking means which are applied when an attempt is made to take the trolley off-site. The security unit merely emulates the global signal that is transmitted around the perimeter of the site.

Also in accordance with this invention, there is provided a retail security system comprising a plurality of wheeled trolleys of the above-mentioned type, at least one first transmitter arranged to transmit said first signal and a second transmitter arranged to transmit said second signal.

Preferably the system comprises a plurality of point-of-sale terminals each comprising a first transmitter.

Preferably each point-of-sale terminal is arranged to transmit said first signal only when a purchase is made or upon activation of an actuator by the cashier. In this manner, it is not possible to provide said indication merely by taking them to or near a point-of-sale terminal.

Preferably the fist and/or second signals comprise radio, optical or acoustic wireless signals.

An embodiment of this invention will now be described by way of an example only and with reference to the accompanying drawings, in which:
FIGURE 1 is a perspective view of a retail store security system in accordance with this invention;
FIGURE 2 is a sectional view through a handle of a shopping trolley of the system of Figure 1;
FIGURE 3 is a diagram showing various passages of a shopping trolley through the system of Figure 1;and
FIGURES 4A - D are diagrams illustrating the sequence of events along the route of Figure 3.

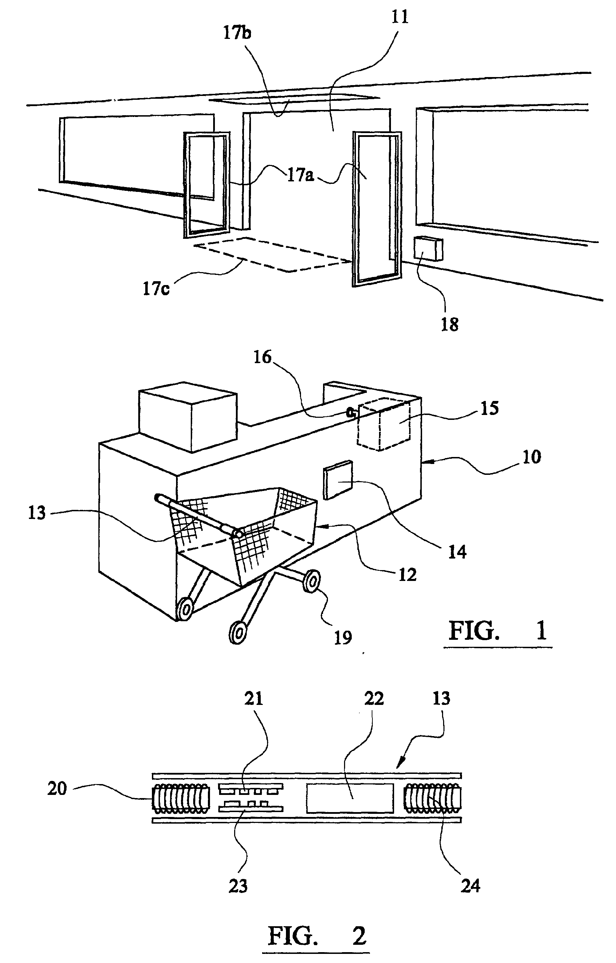

Referring to Figure 1 of the drawings, there is shown a security system for a retail store having a plurality of point-of-sale terminals 10 and a doorway 11 providing free access into and out of the store. A plurality of shopping trolleys 12 are provided for use by customers to carry their selected goods around the store to the point-of-sale and then to carry their goods out of the doorway 11 to their vehicle.

It will be appreciated that it is possible for thieves to leave the store with a trolley full of goods which have not been paid for.

In order to overcome this problem each trolley comprises a security device 13 mounted inside its handle which is arranged to trigger a braking device 19 fitted to one of its wheels.

Each point-of-sale terminal 10 comprises an aerial 14 connected to a first transmitting device 15 mounted under the counter of the terminal 10. An actuator 16 on the first transmitting device 15 can be activated to cause the device to transmit a CREDIT signal via the aerial 14.

A further aerial 17a, b or c is mounted inside the store adjacent the doorway 11. The aerial 17a, b or c is connected to a second transmitting device 18 which either continuously-transmits a low level radio DEBIT signal via the aerial 17a, b or c or which transmits a DEBIT signal whenever a trolley passes through the doorway 11.

Referring to Figure 2 of the drawings, the security device 13 inside the handle of the trolley 12 comprises a receive radio coil 20 connected to an electronic circuit 21 comprising a receiver portion, a memory portion and a control portion. The output of the control portion is connected to an emulator circuit 23 which is arranged to transmit a low level trigger signal via a transmit radio coil 24 to the braking device 19 in the wheel of the trolley 12.

Each trolley 12 has a known braking device 19 on one or more wheels which is arranged to receive a trigger signal from a cable laid around the perimeter of the car park of the store. In use, the braking device 19 is activated by the trigger signal is an attempt is made to take a trolley off the site of the store.

The security device of the present invention is arranged to utilise the same braking device by transmitting a low-level trigger signal via the coil 24, which emulates the trigger signal transmitted by the perimeter cable.

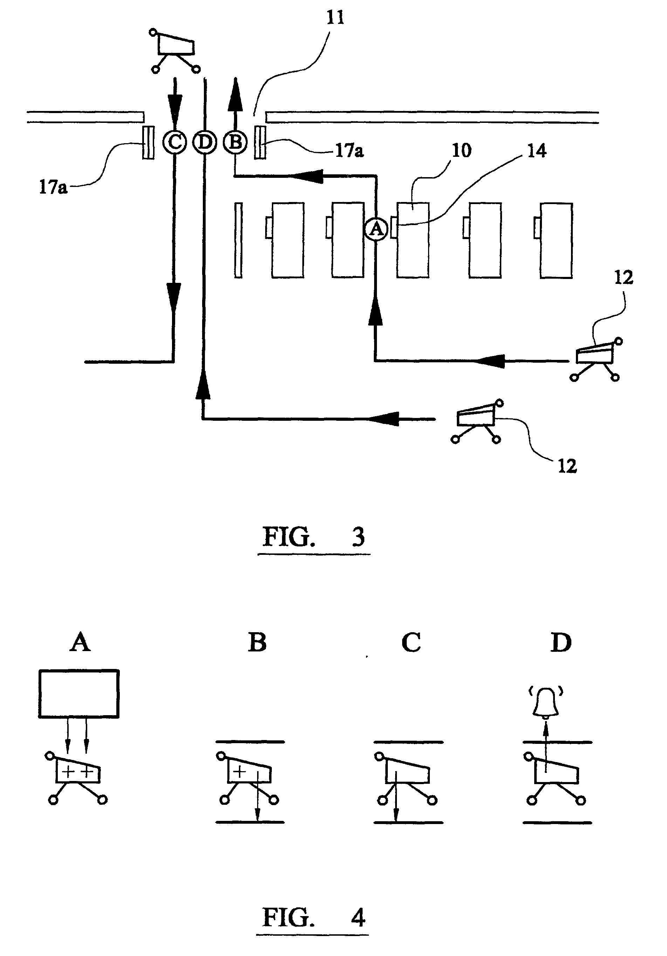

Referring to Figures 3 and 4 of the drawings, at step A, a trolley 12 full of goods is taken to one of the point-of-sale terminals 14 where the goods are paid for. The point-of-sale operator then actuates the actuator 16 which causes a CREDIT signal to be transmitted via the aerial 14 to the security device 13 inside the handle of the trolley 12. The electronic circuit 21 of the device 13 then stores two tokens +,+ in its memory.

The trolley 12 is then pushed towards the doorway 11, whereupon at step B, the trolley 12 reaches the vicinity of the aerial 17a which is transmitting a DEBIT signal. Upon signal of the DEBIT signal, the electronic circuit 21 in the security device 13 checks for the presence of a token in the memory and deducts one of the tokens from the memory.

Once through the doorway, the trolley 14, is taken to the customer's vehicle where the goods are unloaded. The empty trolley is then returned to a storage area.

The empty trolley is then either taken back into the store by another customer for use or is taken by a member of staff to a storage area inside the store. In any event, as the trolley 12 is pushed through the doorway 11 it again passes the aerial 17a, whereupon at step c, the DEBIT signal is received and the electronic circuit again checks for a token and deducts one from memory.

It will be appreciated that there are now no tokens stored in memory. However, two tokens are again applied into memory once the trolley 14 is taken to a point-of-sale 10 and the goods in the trolley paid for. In this manner the trolley 12 is able to freely pass in and out of the store.

All trolleys inside the store should have no tokens stored in memory. However, in order to ensure this, transmitters may be located at strategic points for transmitting a CLEAR signal which clears all tokens from trolleys that pass by.

If a person attempts to leave the store with a trolley full of goods without having paid for the goods at a point-of-sale 10, the trolley has to pass through the aerial 17 at the doorway 11, whereupon at step D, a DEBIT signal is received by the electronic circuit 21 in the trolley 12 which then checks for a token and finds that no tokens are present. The electronic circuit then activates the circuit 23 which transmits a trigger signal to apply the brake 19.

In the manner, a trolley full of goods cannot be taken through the doorway 11 unless the trolley has been credited with two tokens at a point-of-sale. Preferably, an audible or visual alarm is also triggered when the brakes are applied, so as to alert a member of staff that an attempt theft has occurred.

It will be appreciated that a security system in accordance with this invention helps to substantially reduce losses due to theft.

## Claims

1. A device comprising a receiver means for receiving, first and second wireless signals from first and second transmitters respectively, indicator means arranged to provide an indication only when said first signal is received, and control means for checking for the presence of said indication when said second signal is received and for generating an alarm signal only in the event that said indication is not present.

2. A device as claimed in claim 1, arranged to receive and store a token in said indicator means when said first signal is received, the control means being arranged to check for the presence of said token when said second signal is received and to generate an alarm signal in the event that said token is not present.

3. A device as claimed in claim 1, arranged to delete a token from said indicator means when said first signal is received, the control means being arranged to check for the presence of said token when said second signal is received and to generate an alarm signal in the event that said token is present.

4. A device as claimed in any preceding claim, in which the control means is arranged to remove the indication upon receipt of said second signal.

5. A device as claimed in any preceding claim, in which the control means is arranged to remove the indication after a predetermined period has elapsed following receipt of the first signal

6. A device as claimed in any preceding claim, in which the control means is arranged to inhibit said alarm signal until the second signal has been received at least twice.

7. A device as claimed in any preceding claim, comprising means for removing the indication after a predetermined time period has elapsed following receipt of the first signal.

8. A device as claimed in any of claims 1 to 6, comprising means for cancelling the flags upon receipt of a CLEAR signal.

9. A device as claimed in any preceding claim, in which at least the first signal is coded.

10. A trolley comprising a device as claimed in any preceding claim, the trolley comprising a plurality of wheels, with at least one of the wheels incorporating braking means arranged to apply a braking force in the event that an alarm signal is generated.

11. A trolley as claimed in claim 10, in which the device comprises a transducer arranged to transmit an alarm in the event that said alarm signal is generated.

12. A trolley as claimed in claims 10 or 11, in which the control means is further arranged to apply said alarm signal to said braking means upon receipt of a global signal.

13. A trolley as claimed in claims 12, in which the braking means is also arranged to activate upon receipt of a global signal.

14. A trolley as claimed in claims 12, in which the braking means is arranged to activate upon receipt of a global signal generated by the device in response to said alarm signal.

15. A retail security system comprising a plurality of trolleys as claimed in any of claims 10 to 14, at least one first transmitter arranged to transmit said first signal and a second transmitter arranged to transmit said second signal.

16. A retail security system as claimed in claim 15, comprising at least one point-of-sale terminal, each terminal comprising a first transmitter.

17. A retail security system as claimed in claim 15, in which each point-of-sale terminal is arranged to transmit said first signal when a purchase is made.

18. A retail security system as claimed in claim 15, in which each point-of-sale terminal is arranged to transmit said first signal upon activation of an actuator.

19. A retail security system as claimed in any of claims 15 to 18, in which the first and/or second signals comprise radio, optical or acoustic wireless signals.
